# EUROPÄISCHE PATENTANMELDUNG

(11) **EP 0 574 743 A2**
(43) Veröffentlichungstag der Anmeldung: **22.12.1993**
(21) Anmeldenummer: 93108462.8
(22) Anmeldetag: 26.05.1993
(51) Int. Cl.: B60R 16/02, H02J 9/00, G06F 1/30

(54) **Gepufferte Spannungsversorgung für Bordelektronik**

(30) Priorität: 13.06.1992 DE 4219398
(71) Anmelder: Claas OHG beschränkt haftende offene Handelsgesellschaft, D-33426 Harsewinkel (DE)
(72) Erfinder: Behnke, Willi, W-4803 Steinhagen (DE); Hieronymus, Peter, W-4815 Schloss Holte (DE)
(74) Vertreter: Hanewinkel, Lorenz, Dipl.-Phys.

(57) **Zusammenfassung**

Spannungsversorgungsvorrichtung für eine, insbes. in einem Fahrzeug angeordnete, Computerelektronik (CE), deren Speicher (MEM) über einen Pufferakkumulator (PA) gespeist sind und deren Spannungsversorgungsleitung (UB) jeweils abhängig von einer Betriebsstellung (BS) eines Zündschalters (Z) von einem Startakkumulator (BA) gespeist wird, der jeweils in einer Anlaßstellung (AS) einen Anlasser (AM) speist, wobei jeweils ein die Betriebsstellung (BS) anzeigendes Betriebssignal (BSS) einem leicht verzögert ansprechenden und stark verzögert abfallenden Zeitschaltglied (TG) zugeführt ist, das von dem Pufferakkumulator (PA) und parallel dazu über eine Entkoppeldiode (D1) von dem Startakkumulator (BA) gespeist ist und das jeweils betätigt die so gebildete Versorgungsspannung (UV) auf die Spannungsversorgungsleitung (UB) schaltet.

Es ist eine Überwachung der Pufferbatterie (PA) vorgesehen.

## Beschreibung

Die Erfindung betrifft eine Spannungsversorgungsvorrichtung für eine, insbes. in einem Fahrzeug angeordnete, Computerelektronik, deren Speicher über einen Pufferakkumulator gespeist sind und deren Spannungsversorgungsleitung jeweils abhängig von einer Betriebsstellung eines Zündschalters von einem Startakkumulator gespeist wird, der jeweils in einer Anlaßstellung einen Anlasser speist.

Es ist bekannt, in Fahrzeugen angeordnete Computerelektroniken mit Pufferbatterien auszurüsten, die dem Informationserhalt in den einzelnen Speichern der verschiedenen Module der Computerelektronik sicherstellen und diesen deshalb einzeln zugeordnet sind. Hierbei sind gewöhnlich umweltgefährdende Batterien eingesetzt, deren Funktion praktisch nicht kontrollierbar ist. Diese Batterien sind erforderlich, weil in den Fahrzeugen häufig erhebliche Spannungschwankungen an dem zentral die Elektronik speisenden Fahrzeugakkumulator auftreten, was insbesondere dann der Fall ist, wenn der hochbelastete Anlassermotor eingeschaltet wird. In Landmaschinen treten beispielsweise auch dann solche Spannungeinbrüche ein, wenn Motore für den Reversierbetrieb bei Störungen betätigt werden. Während solcher Spannungseinbrüche ist die Elektronik außer Funktion gesetzt, und sie führt einen Wiederstartprogrammzyklus aus, sobald die Versorgungsspannung die vorgegebene Mindesthöhe wieder erreicht hat. Hierbei können jedoch Störung dadurch auftreten, daß die einzelnen Elektronikmodule, die betriebsmäßig miteinander gekoppelt sind, bei unterschiedlichen Schwellspannungen ihre Funktion wieder aufnehmen, weshalb besondere Schutzmaßnahmen gegen Fehlsteuerungen vorgesehen werden müssen.

Es ist Aufgabe der Erfindung, eine gepufferte Spannungsversorgung für eine Bordelektronik zu schaffen, die höhere Zuverlässigkeit aufweist und einen sicheren Einschaltbetrieb der Elektronik gewährleistet sowie umwelt- und wartungsfreundlicher ist.

Die Lösung besteht darin, daß jeweils ein die Betriebsstellung anzeigendes Betriebssignal einem leicht verzögert ansprechenden und stark verzögert abfallenden Zeitschaltglied zugeführt ist, das von dem Pufferakkumulator und parallel dazu über eine Ladediode von dem Startakkumulator gespeist ist und das jeweils betätigt die so gebildete Versorgungsspannung auf die Spannungsversorgungsleitung schaltet.

Vorteilhafte Ausgestaltungen sind in den Unteransprüchen angegeben.

Der Pufferakkumulator wird zweckmäßig über einen Ladewiderstand und eine Ladediode aus dem Startakkumulator des Fahrzeuges gespeist. Beide Akkumulatoren sind vorteilhaft relativ umweltfreundliche Bleiakkumulatoren mit der gleichen Nennspannung. Der Pufferakkumulator speist, sofern die Elektronik abgeschaltet ist, sämtliche elektronische Daten- und Programmspeicher zwecks einer Datensicherung, und er speist auch die Elektronik während solcher Zeiten, zu denen durch eine extreme Belastung durch einen Anlasser oder ähnliches die Spannung am Startakkumulator unter den zulässigen Grenzwert abgesunken ist.

Das Zeitschaltglied wird vorteilhaft von einem sich langsam entladendes Zeitglied gesteuert, welches über eine Diode mit der Spannung des Startakkumultors aufgeladen wird, sobald das Fahrzeug eingeschaltet wird und solange es in Betrieb ist. Das Zeitglied schaltet einen Transistor ein, welcher kollektorseitig ein Relais speist, dessen Schaltkontakt die Computerelektronik mit der Betriebsspannung versorgt. Solange also das Zeitglied noch ausreichend den Transistor mit Basisstrom versorgt, auch wenn die Spannung an der Startbatterie abgesunken ist, bleibt die Computerelektronik über den Relaiskontakt mit dem Pufferakkumulator in Verbindung. Hierdurch läßt sich der Computerbetrieb und die gesamte Steuerelektronik aufrechterhalten und eine Fehlschaltung vermeiden. Insbesondere wird diese Funktion sicher gestellt dadurch, daß das Relais nur dann beim Einschalten des Zündschalters zum Anzug kommt, wenn sowohl die Startbatterie als auch die Pufferbatterie eine ausreichende Ausgangsspannung noch aufweisen. Dies wird durch die geeignete Dimensionierung der Anzugsspannung des Relais sichergestellt. Da sämtliche Elektronikmodule von der über den Relaiskontakt gelieferten Spannung gleichzeitig beaufschlagt werden, ist eine zuverlässig arbeitend Startbetriebsphase sichergestellt.

Es ist weiterhin vorteilhaft vorgesehen, daß die Funktionstüchtigkeit des Pufferakkumulators bei jedem Neustart des Fahrzeuges und des Computers überprüft wird. Hierzu wird die Versorgungsspannung in einem der Elektronikmodule einem Meßeingang zugeführt und programmäßig dann gemessen und mit einer vorgebenen Grenzspanung verglichen, wenn der Fahrzeugakkumulator Unterspannung aufweist, so daß die gemessene Spannung nur auf der Spannung des Pufferakkumulators basiert. Dieser zweckmäßige Zeitpunkt der Spannungsmessung kann in einfacher Weise über einen programmäßigen Zeitversatz bestimmt sein, wobei davon ausgegangen wird, daß der Zündschalter im allgemeinen nach einer bestimmten Zeit von der Betriebsstellung in die Anlaßstellung umgeschaltet ist, so daß dann der Anlassermotor den Startakkumulator extrem belastet.

Sofern es vorgesehen ist, daß die Fahrzeugdrehzahl über einen Drehmelder durch die Computerelektronik laufend überwacht wird, wie dies bei Landmaschinen häufig der Fall ist, dann ist es vorteilhaft vorgesehen, daß in dem Moment wenn beim Anlasen der Fahrzeugmotor eine noch sehr niedrige Drehzahl hat, die Spannungsmessung vorgenommen wird. Im Fall, daß keine ausreichende Spannung an dem Pufferakkumulator festgestellt wird, gibt die Computerlektronik ein Warnsignal an den Bediener, wodurch rechtzeitig für eien Erneuerung der Pufferbatterie gesorgt werden kann.

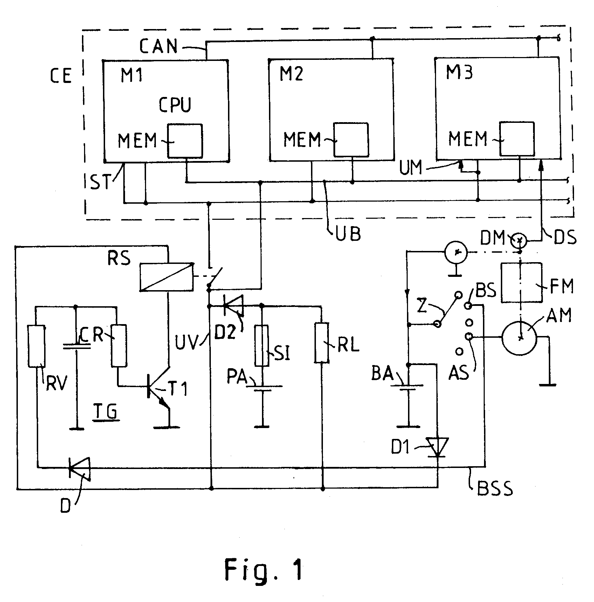

- Fig. 1: zeigt ein Blockschaltbild, in dem die Einzelheiten einer bevorzugten Schaltungsanordnung dargestellt sind.

Aus der Figur 1 ist die übliche Anlasserschaltung eines Fahrzeugmotors (FM) mittels einen elektrischen Anlaßmotors (AM) zu ersehen, wobei das übliche Anlasserrelais nicht explizit dargestellt ist. Der Zündschalter (Z) verbindet in einer ersten Betriebsstellung (BS) den Fahrzeugakkumulator (BA) mit dem Bordnetz des Fahrzeuges, und in einer zweiten Stellung, der Anlaßstellung (AS), mit dem Anlaßmotor (AM). Zur Versorgung der Computerelektronik(CE), die aus mehreren Modulen (M1 - M3) besteht, ist eine Betriebssignalleitung mit dem Betriebsstellungssignal (BSS) von dem ersten Zündschalterkontakt der ersten Zündschalterstellung zu der Startschaltung der Elektronik (CE) geführt. Der Fahrzeugakkumulator (BA) versorgt über einen Ladewiderstand (RL) und eine Ladediode (D1) den Pufferakkumulator (PA). Vorzugsweise ist dem Pufferakkumulator (PA) eine Sicherung (SI) vorgeschaltet. Das Betriebsstellungssignal (BSS) ist über eine Diode (D) und einen relativ niederohmigen Vorwiderstand (RV) auf ein speicherndes RC-Glied (RC) geführt, dessen Widerstand (R) auf die Basis eines Schalttransistors (T1) geführt ist. Der Schalttransistor (T1) schaltet ein Relais (RS), das mit der Versorgungsspannung (UV) gespeist ist, welche einerseits über die Ladediode (D1) von dem Startakkumulator (BA) geliefert ist und/oder andererseits, vorzugsweise über eine Entkoppeldiode (D2) aus dem Pufferakkumulator (PA) kommt. Diese Versorgungsspannung (UV) wird, wenn das Relais (RS) anzieht, über den Relaiskontakt der Computerelektronik (CE) als Versorgungsspannung zugeführt und auch auf die Computerstartleitung (ST) gegeben. Unabhängig von der Schaltung des Relais (RS) ist die Versorgungsspanung (UV) direkt auf die Spannungsversorgungseingänge der Speichermodule (MEM) in den einzelnen Elektronikmodulen (M1 - M3) geführt, so daß deren Speicherinhalt auch bei ansonsten abgeschalteter Elektronik gerettet ist.

Das Schaltrelais (RS) ist so dimensioniert, daß es nur dann anzieht, wenn eine Mindestspannung unterhalb der Versorgungsspannung (UV) vorliegt, die bei voll funktionsfähigen Akkumulatoren (BA, PA) auftritt. Weiterhin ist vorgesehen, daß die Abfallspannung des Relais (RS) etwas über der minimalen Betriebsspannung der Computerelektronik (CE) liegt, so daß ein ausreichender Pufferbetrieb der Speichermodule (MEN) erreicht ist, wenn die Pufferspannung nicht mehr für einen Computerbetrieb ausreicht.

Die Versorgungsspannung (UV) ist vorteilhaft auf einen Spannungsmeßeingang (UM) des Ein- Ausgabeelektronikmoduls (M3) geführt. Außerdem ist einer der Meßeingänge dieses Ein-Ausgabemoduls mit einem Drehzahlsignal (DS) eines Drehzahlmessers (DM) beschaltet, der an der Achse des Fahrzeugmotors (FM) angeordnet ist. Die einzelenen Module (M1, M2, M3) sind in bekannter Weise über einen CAN-Bus miteinander informationsmäßig verbunden, so daß ein in der CPU ablaufende Programm die Meßwerte des Drehzahlsignales (DS) und des Versorgungsspannungssignales (UV) auswerten kann.

## Patentansprüche

1. Spannungsversorgungsvorrichtung für eine, insbes. in einem Fahrzeug angeordnete, Computerelektronik (CE), deren Speicher (MEM) über einen Pufferakkumulator (PA) gespeist sind und deren Spannungsversorgungsleitung (UB) jeweils abhängig von einer Betriebsstellung (BS) eines Zündschalters (Z) von einem Startakkumulator (BA) gespeist wird, der jeweils in einer Anlaßstellung (AS) einen Anlasser (AM) speist,
dadurch gekennzeichnet, daß jeweils ein die Betriebsstellung (BS) anzeigendes Betriebssignal (BSS) einem leicht verzögert ansprechenden und stark verzögert abfallenden Zeitschaltglied (TG) zugeführt ist, das von dem Pufferakkumulator (PA) und parallel dazu über eine Ladediode (D1) von dem Startakkumulator (BA) gespeist ist und das jeweils betätigt die so gebildete Versorgungsspannung (UV) auf die Spannungsversorgungsleitung (UB) schaltet.

2. Spannungsversorgungsvorrichtung nach Anspruch 1, dadurch gekennzeichnet, daß der Startakkumulator (BA) den Pufferakkumulator (PA) über einen Ladewiderstand (RL) und die Ladediode (D1) ladend speist.

3. Spannungsversorgungsvorrichtung nach Anspruch 1 oder 2, dadurch gekennzeichnet, daß das Zeitschaltglied (TG) aus einem diodengespeisten RC-Glied (R, C) an der Basis eines Transistors (T1) besteht, der kollektorseitig ein Relais (RS) speist, dessen Schaltkontakt jeweils die Versorgungsspannung (UV) auf die Spannungsversorgungsleitung (UB) schaltet.

4. Spannungversorgungsvorrichtung nach einem der vorhergehenden Ansprüche, dadurch gekennzeichnet, daß das Zeitschaltglied (TG) eine Abfallverzögerungszeit von mehreren Sekunden aufweist, so daß diese einen Anlaßvorgang üblicher Dauer überbrückt.

5. Spannungsversorgungsvorrichtung nach einem der vorstehenden Ansprüche, dadurch gekennzeichnet, daß die Spannungsversorgungsschaltung (UB) einem Spannungsmeßeingang (UM) sowie einem Programmstarteingang (ST) der Computerelektronik (CE) zugeführt ist und nach jedem Programmstart durch die Computerelektronik (CE) mit einem Zeitversatz die Spannung an dem Spannungsmeßeingang (UM) mindestens einmal gemessen und auf eine Unterschreitung einer vorgegebenen Mindestspannung überprüft wird, worauf sie ggf. eine Warnmeldung an ein Bedienerpult abgibt.

6. Spannungsversorgungsvorrichtung nach Anspruch 5, dadurch gekennzeichnet, daß der Zeitversatz so groß gewählt ist, wie gewöhnlich ein Umschalten des Zündschalters (Z) zwischen dem Auftreten der Betriebsstellung (BS) und der Anlaßstellung (AS) dauert.

7. Spannungsversorgungsvorrichtung nach Anspruch 5, dadurch gekennzeichnet, daß der Zeitversatz jeweils dadurch bestimmt ist, daß ein Drehmeldersignal (DS) eines Motordrehzahlmelders (DM) von der Computerelektronik (CE) vom Programmstart an laufend darauf überprüft wird, wann eine vorgegebene niedrige Drehzahl erreicht oder überschritten ist, worauf die Spannung an dem Spannungsmeßeingang (UM) gemessen und überprüft wird.

8. Spannungsversorgungsvorrichtung nach einem der vorstehenden Ansprüche, dadurch gekennzeichnet, daß der Pufferakkumulator (PA) ein Bleiakkumulator ist.

9. Spannungsversorgungsvorrichtung nach Anspruch 3, dadurch gekennzeichnet, daß das Relais (RS) eine Anzugsspannung aufweist, die 10 - 20% unter der Versorgungsspannung (UV) liegt.

10. Spannungsversorgungsvorrichtung nach Anspruch 9, dadurch gekennzeichnet, daß das Relais (RS) eine Abfallspannung aufweist, die um einige zehntel Volt über einer minimalen Betriebsspannung der Computerelektronik (CE) liegt.
